# EUROPÄISCHE PATENTANMELDUNG

(11) **EP 4 552 462 A1**
(43) Veröffentlichungstag der Anmeldung: **14.05.2025**
(21) Anmeldenummer: 24401023.7
(22) Anmeldetag: 16.10.2024
(51) Int. Cl.: A01C 7/20, A01B 29/06, A01B 69/00, A01C 19/02, B62D 59/02

(54) **LANDWIRTSCHAFTLICHE ARBEITSMASCHINE MIT ANTRIEBSEINRICHTUNG UND VERFAHREN ZUM ANSTEUERN DER ANTRIEBSEINRICHTUNG**

(30) Priorität: 10.11.2023 DE 102023131302
(71) Anmelder: Amazonen-Werke H. Dreyer SE & Co. KG, 49205 Hasbergen (DE)
(72) Erfinder: STIER, Roy, 49205 Hasbergen (DE); SIEDENBURG, Christian, 49205 Hasbergen (DE)

(57) **Zusammenfassung**

Die Erfindung betrifft eine landwirtschaftliche Arbeitsmaschine (10), insbesondere eine Sämaschine, mit zumindest einer zumindest ein Walzensegment (14a-14l) umfassenden Walze (12), wobei zumindest ein Walzensegment (14a-14l) der zumindest einen Walze (12) mittels einer Antriebseinrichtung (206) antreibbar ist, und mit einer Erfassungseinrichtung (202), welche dazu eingerichtet ist, zumindest einen aktuellen Maschinenzustand der landwirtschaftlichen Arbeitsmaschine (10) betreffenden Sensordaten zu erfassen.

## Beschreibung

Die Erfindung betrifft eine landwirtschaftliche Arbeitsmaschine nach dem Oberbegriff des Patentanspruchs 1, einen landwirtschaftlichen Maschinenverbund nach dem Oberbegriff des Patentanspruchs 7, ein Verfahren zum Betreiben einer landwirtschaftlichen Arbeitsmaschine nach dem Oberbegriff des Patentanspruchs 10 sowie ein Verfahren zum Betreiben eines landwirtschaftlichen Maschinenverbunds nach dem Oberbegriff des Patentanspruchs 11.

Landwirtschaftliche Arbeitsmaschinen, beispielsweise Sämaschinen, sind häufig mit zumindest einer Walze ausgestattet, mittels welcher das Erdreich einer landwirtschaftlichen Nutzfläche aufgebrochen oder beispielsweise für die Saatgutablage rückverfestigt werden kann. Während eines Arbeitsvorgangs werden landwirtschaftliche Arbeitsmaschinen üblicherweise von einem Zugfahrzeug gezogen oder von einem Trägerfahrzeug getragen, wobei es beabsichtigt ist, dass die Arbeitsmaschine einem beabsichtigten Fahrweg folgt, welcher üblicherweise von dem Zug- oder Trägerfahrzeug der Arbeitsmaschine vorgegeben wird. Damit der Boden der landwirtschaftlichen Nutzfläche wie beabsichtigt mittels der Arbeitsmaschine bearbeitet werden kann, muss daher sichergestellt werden, dass die Arbeitsmaschine dem Fahrweg seines Zug- oder Trägerfahrzeugs zuverlässig folgt.

In der Praxis hat sich allerdings herausgestellt, dass während eines Arbeitsvorgangs auf einer landwirtschaftlichen Nutzfläche Ereignisse eintreten können, insbesondere durch äußerliche Einflüsse, welche zu einer Abweichung des beabsichtigten Fahrweges der Arbeitsmaschine führen können, wobei die Arbeitsmaschine dem Fahrweg des Zug- oder Trägerfahrzeugs dann nicht mehr wie beabsichtigt folgt. Insbesondere bei Fahrten der Arbeitsmaschine quer zu einer Hangneigung, bei Kurvenfahrten und/oder Wendemanövern, bei einer zu niedrigen Leistung des Zug- oder Trägerfahrzeugs und/oder bei ungünstigen Bodenverhältnissen, beispielsweise sehr schlammigem Boden, kann es zu Abweichungen des Fahrwegs der Arbeitsmaschine kommen, sodass die Arbeitsqualität der Bearbeitung der landwirtschaftlichen Nutzfläche mittels der Arbeitsmaschine herabgesetzt sein kann.

Die der Erfindung zugrunde liegende Aufgabe besteht somit darin, landwirtschaftliche Arbeitsmaschinen so zu verbessern, dass sie zum Sicherstellen einer gleichbleibend hohen Arbeitsqualität zuverlässig einem beabsichtigten Fahrweg folgen.

Die Aufgabe wird gelöst durch eine landwirtschaftliche Arbeitsmaschine der eingangs genannten Art, wobei die landwirtschaftliche Arbeitsmaschine eine elektronische Steuerungseinrichtung umfasst, welche dazu eingerichtet ist, die Antriebseinrichtung zum Antreiben des zumindest einen Walzensegments auf Grundlage der erfassten Sensordaten zu steuern.

Durch ein Antreiben zumindest eines Walzensegments zumindest einer Walze einer landwirtschaftlichen Arbeitsmaschine kann der Fahrweg der Arbeitsmaschine gezielt beeinflusst werden, sodass beispielsweise während einer Fahrt bei Hangneigung und/oder bei Kurvenfahrten und/oder bei Wendemanövern der Arbeitsmaschine durch ein Antreiben des zumindest einen Walzensegments unterstützend eingegriffen werden kann, sodass eine drohende Abweichung von einem beabsichtigten Fahrweg der Arbeitsmaschine verhindert werden kann und/oder dass die Arbeitsmaschine bei bereits vorhandenen Abweichungen wieder zurück auf den beabsichtigten Fahrweg gebracht werden kann. Zudem kann durch das Antreiben des Walzensegments die Traktion der Arbeitsmaschine verbessert und der Schlupf der Arbeitsmaschine verringert werden, sodass der Fahrweg der Arbeitsmaschine beispielsweise auch bei sehr matschigem Boden zuverlässig beibehalten wird und die Effizienz der Arbeitsmaschine maximiert werden kann.

Weiterhin kann durch das Antreiben von Walzensegmenten der Arbeitsmaschine und die dadurch resultierende höhere Traktion der Arbeitsmaschine erreicht werden, dass das Zug- oder Trägerfahrzeug der Arbeitsmaschine derart unterstützt wird, dass die Größe und/oder die Leistung des Zug- oder Trägerfahrzeugs reduziert werden können, da die zum Ziehen oder Tragen der Arbeitsmaschine benötigte Kraft und/oder Leistung, welche ein Zug- oder Trägerfahrzeug aufbringen müsste, reduziert wird. Außerdem kann das Antreiben von Walzensegmenten der Arbeitsmaschine durch die Unterstützung des Zug- und/oder Trägerfahrzeugs eine Effizienzsteigerung und somit eine Wirkungsgradsteigerung erreicht werden, wodurch der Energieverbrauch gesenkt werden kann.

Die Antriebseinrichtung kann als Motor, insbesondere als Elektromotor, ausgebildet sein oder einen Motor und/oder ein Getriebe umfassen. Die Arbeitsmaschine kann als gezogene Arbeitsmaschine oder als getragene Arbeitsmaschine ausgebildet sein. Die landwirtschaftliche Arbeitsmaschine kann grundsätzlich jede landwirtschaftliche Arbeitsmaschine sein, welche Walzen und/oder Walzensegmente aufweist, beispielsweise eine Bodenbearbeitungsmaschine, insb. ein Grubber, eine Scheibenegge, ein Striegel, sein oder eine Sämaschine. Eine Walze und/oder ein Walzensegment der Arbeitsmaschine erstreckt sich quer zur Bewegungsrichtung der Arbeitsmaschine. Eine Walze kann mehrere Walzensegmente umfassen, wobei mehrere Walzensegmente einer Walze vorzugsweise quer zur Fahrtrichtung der Arbeitsmaschine nebeneinander angeordnet sein können. Insbesondere bei landwirtschaftlichen Arbeitsmaschinen mit einer großen Arbeitsbreite sind Walzen segmentiert, wobei die äußeren Segmente beispielsweise zum Straßentransport hochgeschwenkt werden können, um die zulässige Straßentransportbreite einhalten zu können. Eine landwirtschaftliche Arbeitsmaschine kann mehrere Walzen umfassen, wobei mehrere Walzen insbesondere in Fahrtrichtung der Arbeitsmaschine hintereinander angeordnet und sich parallel zueinander erstrecken können.

Eine Walze und/oder ein Walzensegment für eine landwirtschaftliche Arbeitsmaschine kann als Reifenpacker ausgebildet sein, wobei ein Reifenpacker insbesondere zur Rückverfestigung aufgelockerten Bodens einer landwirtschaftlichen Nutzfläche eingerichtet ist. Vorzugsweise umfasst ein Reifenpacker mehrere quer zur Bewegungsrichtung der Arbeitsmaschine nebeneinander angeordnete Reifen, welche als Packerreifen und/oder als Fahrwerksreifen ausgebildet sein können. Ein oder mehrere Packerreifen und/oder ein oder mehrere Fahrwerksreifen können ein Walzensegment bilden. Vorzugsweise sind einer oder mehrere Reifen eines Reifenpackers angetrieben, insbesondere die Fahrwerksreifen eines Reifenpackers. Mehrere Reifen eines Reifenpackers bilden vorzugsweise gemeinsam zumindest teilweise eine Reifenanordnung, insbesondere einen Reifenpacker, wobei die Reifen einer Reifenanordnung in einer Linie oder in Fahrtrichtung versetzt zueinander quer zur Bewegungsrichtung nebeneinander angeordnet sein können. Fahrwerksreifen eines Reifenpackers dienen insbesondere zum Abstützen der Arbeitsmaschine auf dem Boden einer landwirtschaftlichen Nutzfläche und/oder zum Abstützen auf einer Straße beim Straßentransport der landwirtschaftlichen Arbeitsmaschine. Vorzugsweise sind mehrere Packerreifen jeweils zwischen zwei Fahrwerksreifen angeordnet. Fahrwerksreifen und/oder Packerreifen dienen zur Rückverfestigung des Bodens der Nutzfläche.

Eine Steuerungseinrichtung ist vorzugsweise signalleitend mit einer Erfassungseinrichtung und/oder der Antriebseinrichtung verbunden. Die Steuerungseinrichtung kann Bestandteil eines Bedienterminals für die Arbeitsmaschine und/oder für das Zug- oder Trägerfahrzeug sein.

In einer bevorzugten Ausführungsform der erfindungsgemäßen landwirtschaftlichen Arbeitsmaschine sind mehrere Walzensegmente und/oder mehrere Walzen der Arbeitsmaschine mittels der Antriebseinrichtung antreibbar, wobei die Steuerungseinrichtung dazu eingerichtet ist, die Antriebseinrichtung derart zu steuern, dass die Walzensegmente und/oder die Walzen jeweils separat und/oder gruppenweise mittels der Antriebseinrichtung antreibbar sind. Zum Antreiben mehrerer Walzensegmente und/oder mehrerer Walzen, beispielsweise zum Antreiben mehrerer Reifen eines Reifenpackers, kann die Antriebseinrichtung einen Motor und/oder ein Getriebe zum gleichzeitigen Antreiben mehrerer Walzensegmente und/oder mehrerer Walzen gleichzeitig gemeinsam umfassen. Zudem kann die Antriebseinrichtung mehrere Einzelantriebe umfassen, wobei mehreren Walzensegmenten und/oder mehreren Walzen jeweils ein Einzelantrieb zugeordnet und/oder jeweils ein Einzelantrieb an jeder antreibbaren Walze und/oder an jedem antreibbaren Walzensegment angeordnet sein kann.

Durch das Antreiben der Walzensegmente und/oder der Walzen kann beispielsweise das Wenden der Arbeitsmaschine und/oder eines Maschinengespanns aus einer Arbeitsmaschine und einem Zug- oder Trägerfahrzeug für die Arbeitsmaschine, insbesondere auf dem Vorgewende einer landwirtschaftlichen Nutzfläche, unterstützt werden. Beispielsweise kann durch das Antreiben der Walzensegmente und/oder Walzen der Wenderadius einer Wende der Arbeitsmaschine verkleinert werden. Das Wenden der Arbeitsmaschine kann beispielsweise dadurch unterstützt werden, dass Walzensegmente einer Walze, insbesondere Reifen eines Reifenpackers, vorzugsweise abhängig vom Kurvenradius, mit unterschiedlichen Drehzahlen und/oder in unterschiedlichen Drehrichtungen drehen. Insbesondere können kurveninnere Walzensegmente und/oder kurveninnere Reifen zum Verkleinern des Wenderadius langsamer und/oder rückwärts drehen. Insbesondere können kurvenäußere Walzensegmente und/oder kurvenäußere Reifen zum Verkleinern des Wenderadius schneller und/oder vorwärts drehen. Ein aktueller Kurvenradius kann während einer Kurvenfahrt und/oder während einer Wende der landwirtschaftlichen Arbeitsmaschine von der Erfassungseinrichtung erfasst werden, insbesondere durch Erfassen eines Lenkwinkels des Zug- oder Trägerfahrzeugs, eines Drehwinkels der Unterlenkertraverse der Arbeitsmaschine, eine Drehrate, insbesondere Gierrate, der Arbeitsmaschine, einer Geschwindigkeit und/oder Geschwindigkeitsdifferenz kurveninnerer und kurvenäußerer Bereiche der Arbeitsmaschine und/oder eines Winkels zwischen der Arbeitsmaschine und dem Zug- oder Trägerfahrzeug.

In einer bevorzugten Ausführungsform der erfindungsgemäßen landwirtschaftlichen Arbeitsmaschine ist die Steuerungseinrichtung dazu eingerichtet, die Antriebseinrichtung derart zu steuern, dass die mehreren Walzensegmente und/oder die mehreren Walzen jeweils unabhängig voneinander und/oder gruppenweise mit unterschiedlichen Antriebsleistungen und/oder unterschiedlichen Antriebsmomenten und/oder unterschiedlichen Drehzahlen und/oder unterschiedlichen Drehrichtungen mittels der Antriebseinrichtung antreibbar sind. Dadurch, dass die Walzensegmente und/oder die Walzen jeweils unabhängig voneinander mit unterschiedlichen Antriebsleistungen und/oder unterschiedlichen Antriebsmomenten und/oder unterschiedlichen Drehzahlen und/oder unterschiedlichen Drehrichtungen angetrieben werden können, kann das Antreiben der Walzensegmente und/oder Walzen gezielt gesteuert sowie gezielt an eine aktuell vorherrschende Situation, beispielsweise das gezielte Ausgleichen einer Hangneigung, die Unterstützung einer Kurvenfahrt oder eines Wendemanövers und/oder eine gezielte Unterstützung des Zug- oder Trägerfahrzeugs angepasst werden.

In einer bevorzugten Ausführungsform der erfindungsgemäßen landwirtschaftlichen Arbeitsmaschine betreffen die mittels der Erfassungseinrichtung erfassten Sensordaten den aktuellen Maschinenzustand der landwirtschaftlichen Arbeitsmaschine, insbesondere eine aktuelle Geo-Position und/oder eine aktuelle Bewegungsrichtung der Arbeitsmaschine und/oder einen aktuellen Neigungszustand der Arbeitsmaschine und/oder eine aktuelle Bewegungsgeschwindigkeit und/oder Beschleunigung der Arbeitsmaschine und/oder eine aktuelle auf die Arbeitsmaschine wirkende Querkraft und/oder Querbeschleunigung und/oder eine aktuelle auf die Arbeitsmaschine wirkende Zugkraft und/oder einen Schlupf an einem, mehreren oder sämtlichen Walzensegmenten und/oder an einer, mehrerer oder sämtlicher Walzen der Arbeitsmaschine und/oder die Drehzahl und/oder die Drehrate eines, mehrerer oder sämtlicher Walzensegmente und/oder einer, mehrerer oder sämtlicher Walzen und/oder einen Lenkwinkel der Arbeitsmaschine und/oder eines Zug- oder Trägerfahrzeugs für die Arbeitsmaschine und/oder einen Knickwinkel zwischen der Arbeitsmaschine und dem Zug- oder Trägerfahrzeug.

Vorzugsweise umfasst die Erfassungseinrichtung einen GPS-Sensor und/oder einen Neigungssensor und/oder einen Geschwindigkeitssensor und/oder einen Beschleunigungssensor und/oder einen Kraftsensor und/oder einen Schlupfsensor und/oder einen Drehzahlsensor und/oder einen Drehratensensor und/oder einen Winkelmesser und/oder eine optische Erfassungseinrichtung, beispielsweise eine Kamera.

Vorzugsweise herrscht zwischen dem Zug- oder Trägerfahrzeug und der Arbeitsmaschine stets eine Zugkraft, sodass die Arbeitsmaschine auf Zug belastet ist, um eine Unfallgefahr durch ein Einknicken des Maschinenverbunds zu vermeiden. Vorzugsweise werden die Walzensegmente und/oder die Walzen derart angetrieben, dass der Knickwinkel zwischen Arbeitsmaschine und/oder dem Zug- oder Trägerfahrzeug unter einem Grenzwert und/oder in einem definierten Knickwinkelbereich um einen definierten Sollwert herum gehalten wird, wobei der Grenzwert und/oder der Sollwert bei Kurvenfahrten und/oder beim Wenden der Arbeitsmaschine zum Antreiben der Walzensegmente und/oder der Walzen mittels der Steuerungseinrichtung berücksichtigt werden können. Die Bereiche einer landwirtschaftlichen Nutzfläche, in welchen Kurvenfahrten und/oder Wendemanöver ausgeführt werden müssen, ergeben sich beispielsweise aus einem Fahrgassensystem und/oder einem Spurplanungssystem für die entsprechende Nutzfläche und/oder aus einem Lenkwinkel der Arbeitsmaschine und/oder eines Zug- oder Trägerfahrzeugs und/oder aus einem des Knickwinkel zwischen Arbeitsmaschine und/oder dem Zug- oder Trägerfahrzeug und/oder einer Drehrate, insbesondere Gierrate, der Arbeitsmaschine. Als Schlupf wird die Abweichung der Umdrehungen im Verhältnis zu einer zurückgelegten Strecke bezeichnet, wobei ein Schlupf beispielsweise durch Rutschen des jeweiligen Walzensegments und/oder der jeweiligen Walze verursacht werden kann.

Die Zugkraft kann vorzugsweise an einer Kopplungseinrichtung der Arbeitsmaschine, insbesondere an einer Deichsel, erfasst werden. Alternativ oder zusätzlich kann die Zugkraft basierend auf auf Arbeitswerkzeuge wirkenden Kräften ermittelt werden. Diese beispielsweise über Dehnungsmessstreifen oder andere geeignete Mittel erfasst werden.

Der Lenkwinkel kann elektrisch und/oder mechanisch und/oder hydraulisch an einer Lenkeinrichtung der Arbeitsmaschine und/oder des Zug- oder Trägerfahrzeugs erfasst werden. Der Knickwinkel zwischen Arbeitsmaschine und/oder dem Zug- oder Trägerfahrzeug kann elektrisch und/oder mechanisch und/oder hydraulisch an einer Kopplungseinrichtung der Arbeitsmaschine und/oder des Zug- oder Trägerfahrzeugs erfasst werden.

Vorzugsweise wird zumindest eines der antreibbaren Walzensegmente und/oder eine der antreibbaren Walzen basierend auf erfassten Sensordaten angetrieben, beispielsweise sobald definierte Grenzwerte der Neigung, der Querkräfte, der Zugkraft, der Geschwindigkeit, der Beschleunigung, des Schlupfs, der Drehzahl, der Drehrate, des Lenkwinkels und/oder des Knickwinkels überschritten oder definierte Sollwerte nicht erreicht werden. Zudem kann der Schlupf an den angetriebenen Walzensegmenten erfasst werden, wobei ein zu großer Schlupf darauf hindeuten kann, dass sich die Arbeitsmaschine festgefahren haben könnte oder der Boden der Nutzfläche durch den Schlupf beschädigt wird, woraufhin die Fahrgeschwindigkeit der Arbeitsmaschine und/oder die Drehzahl zumindest eines angetriebenen Walzensegments reduziert werden kann.

Es ist weiterhin eine erfindungsgemäße landwirtschaftliche Arbeitsmaschine bevorzugt, welche eine elektronische Datenverarbeitungseinrichtung umfasst, welche dazu eingerichtet ist, die erfassten Sensordaten zum Steuern der Antriebseinrichtung auszuwerten. Die Datenverarbeitungseinrichtung kann vorzugsweise dazu eingerichtet sein, beim Auswerten der Sensordaten die aktuelle Bewegungsgeschwindigkeit der Arbeitsmaschine mit einer beabsichtigen Sollgeschwindigkeit und/oder einer aktuellen Bewegungsgeschwindigkeit des Zug- oder Trägerfahrzeugs für die Arbeitsmaschine zu vergleichen. Die Datenverarbeitungseinrichtung kann alternativ oder zusätzlich dazu eingerichtet sein, die aktuelle Beschleunigung der Arbeitsmaschine mit einer beabsichtigten Sollbeschleunigung und/oder einer aktuellen Beschleunigung des Zug- oder Trägerfahrzeugs für die Arbeitsmaschine zu vergleichen. Die Datenverarbeitungseinrichtung kann alternativ oder zusätzlich dazu eingerichtet sein, die Bewegungsrichtung der Arbeitsmaschine mit der Bewegungsrichtung des Zug- oder Trägerfahrzeugs für die Arbeitsmaschine zu vergleichen. Die Datenverarbeitungseinrichtung kann alternativ oder zusätzlich dazu eingerichtet sein, aus der aktuellen Geo-Position der Arbeitsmaschine in Verbindung mit Kartendaten und/oder basierend auf Neigungsmesswerten eine an der aktuellen Geo-Position der Arbeitsmaschine vorherrschende Hangneigung einer landwirtschaftlichen Nutzfläche abzuleiten. Die Datenverarbeitungseinrichtung kann alternativ oder zusätzlich dazu eingerichtet sein, aus der aktuellen Geo-Position der Arbeitsmaschine in Verbindung mit Kartendaten, insbesondere Fahrgassendaten, und/oder basierend auf einem gemessenen Lenkwinkel und/oder Knickwinkel und/oder einer gemessenen Drehrate, insbesondere Gierrate, der Arbeitsmaschine die Präsenz einer aktuellen und/oder bevorstehenden Kurvenfahrt aus Fahrgassendaten der landwirtschaftlichen Nutzfläche abzuleiten. Die Steuerungseinrichtung ist dazu eingerichtet, die Antriebseinrichtung auf Grundlage des Vergleichs der Geschwindigkeiten und/oder der Beschleunigungen und/oder der Bewegungsrichtungen und/oder der abgeleiteten Hangneigung und/oder der Präsenz einer aktuellen Kurvenfahrt und/oder einer bevorstehenden Kurvenfahrt zum Antreiben des zumindest einen Walzensegments der zumindest einen Walze zu steuern. Bei dem Vergleich können Abweichungen und/oder Differenzen zwischen einem aktuell gemessenen Wert, beispielsweise der aktuellen Geschwindigkeit, und einem beabsichtigten Sollwert, beispielsweise der Sollgeschwindigkeit, abgeleitet werden, wobei eine Abweichung darauf hindeuten kann, dass zumindest ein Walzensegment und/oder zumindest eine Walze der Arbeitsmaschine angetrieben werden müssen, beispielsweise um Schlupf zu vermeiden, den Fahrweg der Arbeitsmaschine zu korrigieren und/oder um das Zug- oder Trägerfahrzeug zu unterstützen. Abweichende Fahrwege können beispielsweise auf ein Driften der Arbeitsmaschine hindeuten.

Weiterhin kann die Datenverarbeitungseinrichtung beim Auswerten der Sensordaten den Lenkwinkel des Zug- oder Trägerfahrzeugs, den Knickwinkel zwischen der Arbeitsmaschine und dem Zug- oder Trägerfahrzeug, die auf die Arbeitsmaschine wirkenden Querkräfte und/oder die Neigung der Arbeitsmaschine und/oder des Zug- oder Trägerfahrzeugs berücksichtigen. Die Datenverarbeitungseinrichtung ist vorzugsweise signalleitend mit der Steuerungseinrichtung und/oder der Erfassungseinrichtung verbunden. Die Datenverarbeitungseinrichtung kann Bestandteil eines Bedienterminals für die Arbeitsmaschine und/oder für das Zug- oder Trägerfahrzeug sein.

In einer Weiterbildung der erfindungsgemäßen landwirtschaftlichen Arbeitsmaschine ist die Antriebseinrichtung als Elektromotor oder als Hydraulikmotor ausgebildet oder umfasst die Antriebseinrichtung einen Elektromotor oder einen Hydraulikmotor und/oder umfasst die Arbeitsmaschine eine Energieversorgungseinrichtung, welche an der Arbeitsmaschine angeordnet und dazu eingerichtet ist, die Antriebseinrichtung mit Energie zu versorgen und als elektrischer Generator oder als Hydraulikpumpe ausgebildet ist. Die Energieversorgungseinrichtung zum Erzeugen von Energie ist vorzugsweise an einen Nebenantrieb, insbesondere an eine Zapfwelle und/oder an ein Hydrauliksystem des Zug- oder Trägerfahrzeugs für die Arbeitsmaschine anschließbar. Ist die Antriebseinrichtung als Elektromotor ausgebildet oder umfasst die Antriebseinrichtung einen Elektromotor, ist die Energieversorgungseinrichtung vorzugsweise als Generator, insbesondere als Stromgenerator, ausgebildet, mittels welchem der Elektromotor mit elektrischer Energie versorgt werden kann. Ist die Antriebseinrichtung als Hydraulikmotor ausgebildet oder umfasst die Antriebseinrichtung einen Hydraulikmotor, ist die Energieversorgungseinrichtung vorzugsweise als Hydraulikpumpe ausgebildet, mittels welcher der Hydraulikmotor mit Hydraulikdruck versorgt werden kann.

Die der Erfindung zugrunde liegende Aufgabe wird weiterhin durch einen landwirtschaftlichen Maschinenverbund der eingangs genannten Art gelöst, wobei das Zug- oder Trägerfahrzeug eine Energieversorgungseinrichtung umfasst, welche dazu eingerichtet ist, die Antriebseinrichtung zum Antreiben der zumindest einen zumindest ein Walzensegment umfassenden Walze mit Energie zu versorgen. Vorzugsweise ist die Energieversorgungseinrichtung an dem Zug- oder Trägerfahrzeug angeordnet. Vorzugsweise ist die landwirtschaftliche Arbeitsmaschine des landwirtschaftlichen Maschinenverbunds nach einer der vorstehenden Ausführungsformen ausgebildet. Hinsichtlich der Vorteile und Modifikationen des erfindungsgemäßen landwirtschaftlichen Maschinenverbunds wird auf die Vorteile und Modifikationen der erfindungsgemäßen landwirtschaftlichen Arbeitsmaschine verwiesen.

In einer bevorzugten Ausführungsform des erfindungsgemäßen landwirtschaftlichen Maschinenverbunds ist die Energieversorgungseinrichtung als elektrischer Generator oder als Hydraulikpumpe ausgebildet, wobei die Energieversorgungseinrichtung zum Erzeugen von Energie vorzugsweise an einen Motor und/oder ein Getriebe des Zug- oder Trägerfahrzeugs anschließbar ist und/oder an einen Nebenantrieb, insbesondere an eine Zapfwelle und/oder an ein Hydrauliksystem des Zug- oder Trägerfahrzeugs für die Arbeitsmaschine anschließbar ist. Insbesondere kann eine Leistungsabnahme für die Energieversorgungseinrichtung am Motor und/oder am Getriebe des Zug- oder Trägerfahrzeugs erfolgen. Zudem kann die Energieversorgungseinrichtung Bestandteil des Hydrauliksystems des Zug- oder Trägerfahrzeugs sein.

In einer anderen bevorzugten Ausführungsform des erfindungsgemäßen landwirtschaftlichen Maschinenverbunds ist die Energieversorgungseinrichtung als Frontanbau oder als Heckanbau oder als Zwischenanbau an dem Zug- oder Trägerfahrzeug angeordnet. Vorzugsweise wird die Energieversorgungseinrichtung bei Frontanbau, Heckanbau oder Zwischenanbau über die Zapfwelle oder die Hydraulik des Zug- und/oder Trägerfahrzeugs betrieben. Zudem kann die Energieversorgungseinrichtung als ein in das Zug- oder Trägerfahrzeug integriertes Energiesystem ausgebildet sein.

Die der Erfindung zugrunde liegende Aufgabe wird zudem durch ein Verfahren zum Betreiben einer landwirtschaftlichen Arbeitsmaschine der eingangs genannten Art gelöst, wobei die Antriebseinrichtung zum Antreiben des zumindest einen Walzensegments und/oder der zumindest einen Walze auf Grundlage der erfassten Sensordaten mittels einer elektronischen Steuerungseinrichtung gesteuert wird. Vorzugsweise werden die Sensordaten mittels einer elektronischen Datenverarbeitungseinrichtung zum Steuern der Antriebseinrichtung ausgewertet. Vorzugsweise werden die Sensordaten von der elektronischen Erfassungseinheit an die elektronische Steuerungseinrichtung und/oder an die elektronische Datenverarbeitungseinrichtung übertragen. Vorzugsweise leitet die Datenverarbeitungseinrichtung aus den Sensordaten Steuerungsvorgaben zum Steuern der Antriebseinrichtung ab, wobei die abgeleiteten Steuerungsvorgaben vorzugsweise von der Datenverarbeitungseinrichtung an die Steuerungseinrichtung übertragen werden und die Steuerungseinrichtung die Antriebseinrichtung auf Grundlage der abgeleiteten Steuerungsvorgaben steuert. Vorzugsweise ist die landwirtschaftliche Arbeitsmaschine nach einer der vorstehenden Ausführungsformen ausgebildet. Hinsichtlich der Vorteile und Modifikationen des erfindungsgemäßen Verfahrens zum Betreiben einer landwirtschaftlichen Arbeitsmaschine wird auf die Vorteile und Modifikationen der erfindungsgemäßen landwirtschaftlichen Arbeitsmaschine verwiesen.

Die der Erfindung zugrunde liegende Aufgabe wird ferner durch ein Verfahren zum Betreiben eines landwirtschaftlichen Maschinenverbunds der eingangs genannten Art gelöst, wobei die Antriebseinrichtung mittels einer Energieversorgungseinrichtung des Zug- oder Trägerfahrzeugs oder mit Energie zum Antreiben des zumindest einen Walzensegments und/oder der zumindest einen Walze versorgt wird. Vorzugsweise ist die landwirtschaftliche Arbeitsmaschine nach einer der vorstehenden Ausführungsformen ausgebildet. Vorzugsweise ist der landwirtschaftliche Maschinenverbund nach einer der vorstehenden Ausführungsformen ausgebildet. Hinsichtlich der Vorteile und Modifikationen des erfindungsgemäßen Verfahrens zum Betreiben eines landwirtschaftlichen Maschinenverbunds wird auf die Vorteile und Modifikationen der erfindungsgemäßen landwirtschaftlichen Arbeitsmaschine und/oder des erfindungsgemäßen landwirtschaftlichen Maschinenverbunds verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen erfindungsgemäßen Maschinenverbund mit einer erfindungsgemäßen Arbeitsmaschine in einer perspektivischen Ansicht von hinten;
- Fig. 2: einen erfindungsgemäßen Maschinenverbund mit einer erfindungsgemäßen Arbeitsmaschine während einer Hangfahrt in einer schematischen Draufsicht; und
- Fig. 3: einen erfindungsgemäßen Maschinenverbund mit einer erfindungsgemäßen Arbeitsmaschine während einer Kurvenfahrt in einer schematischen Draufsicht.

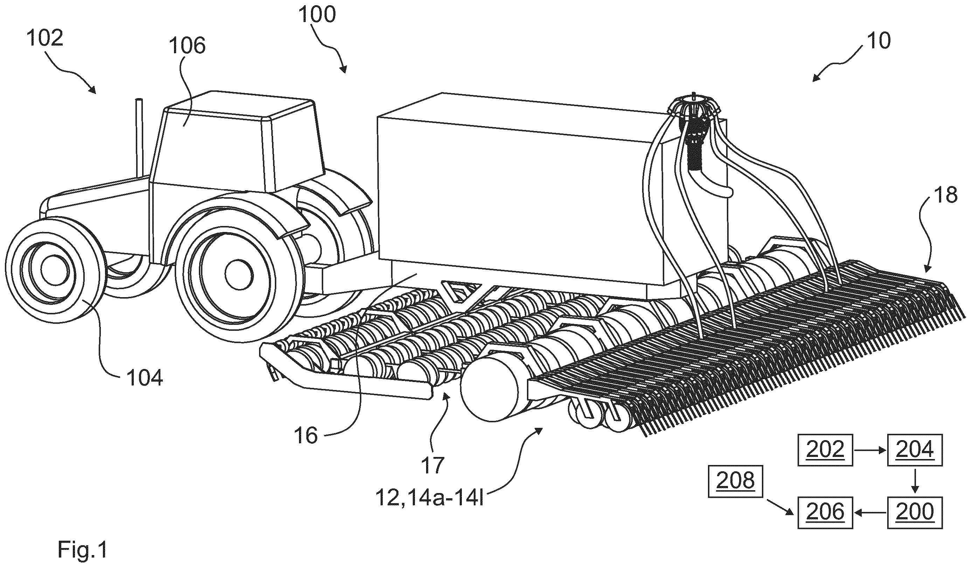

Die Fig. 1 zeigt eine erfindungsgemäße landwirtschaftliche Arbeitsmaschine 10, welche gemeinsam mit einem Zug- oder Trägerfahrzeug 102 einen landwirtschaftlichen Maschinenverbund 100 bildet. Die landwirtschaftliche Arbeitsmaschine 10 ist beispielhaft als gezogene Sämaschine ausgebildet, wobei das Zug- oder Trägerfahrzeug 102 als Zugmaschine, insbesondere als Traktor, ausgebildet ist. Das als Traktor ausgebildete Zug- oder Trägerfahrzeug 102 umfasst eine Fahrerkabine 106 für einen Maschinenbediener, wobei in der Fahrerkabine 106 zumindest ein Bedienterminal für die Arbeitsmaschine 10 und/oder für das Zug- oder Trägerfahrzeug 102 angeordnet sein kann. Zudem umfasst das Zug- oder Trägerfahrzeug 102 lenkbare Räder 104. Die als gezogene Sämaschine ausgebildete Arbeitsmaschine 10 umfasst Arbeitswerkzeuge 18, wobei die Arbeitswerkzeuge 18 insbesondere Säschare und/oder Abdruckrollen der Sämaschine sein können, mittels welchen Saatgut in eine landwirtschaftliche Nutzfläche N eingebracht wird. In Fahrtrichtung des Maschinenverbunds 100 vor den Arbeitswerkzeugen 18 ist eine Walze 12 an der Arbeitsmaschine 10 angeordnet, wobei die Walze 12 beispielhaft als Reifenpacker ausgebildet ist.

Die als Reifenpacker ausgebildete Walze 12 umfasst Walzensegmente 14a - 14l, welche quer zur Bewegungsrichtung B2 der Arbeitsmaschine 10 nebeneinander angeordnet sind. Die Walzensegmente 14a - 14l der Walze 12 sind als Reifen, insbesondere als Packerreifen und/oder Fahrwerksreifen, der Arbeitsmaschine 10 ausgebildet. Eine als Reifenpacker ausgebildete Walze 12 ist dazu eingerichtet, den Boden einer landwirtschaftlichen Nutzfläche N durch Andrücken des Bodens rückzuverfestigen. Die Walze 12 kann in anderen Ausführungsformen der Erfindung außerdem beispielsweise als Stabwalze, Zahnpackerwalze oder Keilringwalze ausgebildet sein. In anderen Ausführungsformen kann die Arbeitsmaschine 10 statt als Sämaschine außerdem als jede andere landwirtschaftliche Arbeitsmaschine 10 ausgebildet sein, welche zumindest eine Walze 12 umfasst, beispielsweise als Grubber. In einer nicht dargestellten Weise können sich die Arbeitswerkzeuge 18 in einer für den Straßentransport der Arbeitsmaschine 10 eingestellten ausgehobenen Stellung befinden, wobei der Bodenkontakt der Arbeitswerkzeuge 18 für den Straßentransport aufgehoben ist. In der dargestellten Ansicht befindet sich die Arbeitsmaschine in einer Arbeitsstellung, wobei sich die Arbeitswerkzeuge 18 im Bodenkontakt befinden. Zudem weist die Arbeitsmaschine 10 einen Trägerrahmen 16 auf, wobei die Walze 12 mit ihren Walzensegmenten 14a - 14l und die Arbeitswerkzeuge 18 an dem Trägerrahmen 16 befestigt sind. Die Arbeitsmaschine 10 kann derart eingerichtet sein, dass ein Walzensegment oder mehrere Walzensegmente schwenkbar an der der Arbeitsmaschine angeordnet sind, insbesondere um zwischen einer Straßentransportstellung und einer Arbeitsstellung verbracht zu werden. Die Arbeitsmaschine 10 kann weitere Arbeitswerkzeuge 17 umfassen, die beispielsweise als Bodenbearbeitungselemente ausgeführt sind. Die Arbeitsmaschine 10 kann zudem mehrere Walzen 12 umfassen, wobei mehrere Walzen 12 vorzugsweise in Bewegungsrichtung B2 der Arbeitsmaschine 10 beabstandet voneinander hintereinander und/oder parallel zueinander angeordnet sind.

Weiterhin umfasst die Arbeitsmaschine 10 eine Antriebseinrichtung 206, welche insbesondere als Elektromotor ausgebildet sein kann. Mittels der Antriebseinrichtung 206 ist die Walze 12 der Arbeitsmaschine 10 und/oder zumindest eines der mehreren Walzensegmente 14a - 14l der Walze 12 antreibbar. Insbesondere können mehrere oder sämtliche der Walzensegmente 14a - 14l mittels der Antriebseinrichtung 206 unabhängig voneinander und/oder gruppenweise angetrieben werden. Vorzugsweise ist die Antriebseinrichtung 206 an der Arbeitsmaschine 10 angeordnet. Die Walzensegmente 14a - 14l können gemeinsam mittels eines Motors der Antriebseinrichtung 206 angetrieben werden. Zudem kann die Antriebseinrichtung 206 mehrere Motoren, insbesondere mehrere Elektromotoren, umfassen, welche beispielsweise jeweils als Einzelradantrieb an jeweils einem Walzensegment der Walzensegmente 14a - 14l angeordnet sind, um jedes antreibbare Walzensegment 14a - 14l unabhängig voneinander antreiben zu können.

Des Weiteren umfasst die Arbeitsmaschine zumindest eine Erfassungseinrichtung 202, eine Datenverarbeitungseinrichtung 204 und eine Steuerungseinrichtung 200. Durch die Datenverarbeitungseinrichtung 204, die Erfassungseinrichtung 202 und die Steuerungseinrichtung 200 wird es ermöglicht, das Antreiben der Walze 12 und/oder der Walzensegmente 14a - 14l zu steuern und somit das Antreiben individuell auf unterschiedliche Gegebenheiten während eines Bearbeitungsvorgangs auf einer landwirtschaftlichen Nutzfläche N zu steuern. Die Erfassungseinrichtung 202, welche beispielsweise ein oder mehrere Sensoren umfassen kann, ist dazu eingerichtet, Sensordaten zu erfassen, welche einen aktuellen Maschinenzustand der Arbeitsmaschine 10 betreffen. Die mittels der Erfassungseinrichtung 202 erfassten Sensordaten können anschließend an die Datenverarbeitungseinrichtung 204 übertragen werden, wobei die Datenverarbeitungseinrichtung 204 dazu eingerichtet ist, die erfassten Sensordaten auszuwerten, um einen aktuellen Maschinenzustand der Arbeitsmaschine 10 aus den Sensordaten abzuleiten. Insbesondere kann die Datenverarbeitungseinrichtung 204 aus den Sensordaten Steuerungsvorgaben ableiten, welche das Steuern der Arbeitsmaschine 10 und/oder des Zug- oder Trägerfahrzeugs 102 für die Arbeitsmaschine 10 betreffen. Die von der Datenverarbeitungseinrichtung 204 abgeleiteten Steuerungsvorgaben können anschließend an die Steuerungseinrichtung 200 übertragen werden, wobei die Steuerungseinrichtung 200 dazu eingerichtet ist, die Antriebseinrichtung 206 auf Grundlage der Steuerungsvorgaben zum Antreiben der Walze 12 und/oder der Walzensegmente 14a - 14l zu steuern. Auf diese Weise kann das Antreiben der Walze 12 und/oder der Walzensegmente 14a - 14l individuell an aktuell vorherrschende Bedingungen während eines Bodenbearbeitungsvorgangs mittels der Arbeitsmaschine 10 angepasst oder auf eintretende Ereignisse werden.

Vorzugsweise sind die Steuerungseinrichtung 200, die Erfassungseinrichtung 202, die Datenverarbeitungseinrichtung 204 und/oder die Antriebseinrichtung 206 signalleitend miteinander verbunden. Die Steuerungseinrichtung 200 und/oder die Datenverarbeitungseinrichtung 204 können an der Arbeitsmaschine 10 und/oder in der Fahrerkabine 106 des Zug- oder Trägerfahrzeugs 102 angeordnet sein. Insbesondere können die Steuerungseinrichtung 200 und/oder die Datenverarbeitungseinrichtung 204 Bestandteil eines Bedienterminals für die Arbeitsmaschine 10 und/oder das Zug- oder Trägerfahrzeug 102 sein. Die Erfassungseinrichtung 202 ist vorzugsweise an der Arbeitsmaschine 10 angeordnet. Zudem kann der Maschinenverbund 100 eine Energieversorgungseinrichtung 208 umfassen, wobei die Energieversorgungseinrichtung 208 an der Arbeitsmaschine 10 oder an dem Zug- oder Trägerfahrzeug 102 angeordnet sein kann. Die Energieversorgungseinrichtung 208 kann beispielsweise als Stromgenerator zur Energieversorgung einer als Elektromotor ausgebildeten Antriebseinrichtung 206 ausgebildet sein, wobei die Energieversorgungseinrichtung 208 zum Erzeugen von elektrischer Energie beispielsweise über eine Zapfwelle des Zug- oder Trägerfahrzeugs 102 oder ein Hydrauliksystem des Zug- oder Trägerfahrzeugs 102 zum Energieerzeugen angetrieben werden kann. Die Energieversorgungseinrichtung 208 kann beispielsweise als Frontgewicht, Zwischengewicht oder als Heckanbau ausgebildet sein. Vorzugsweise ist die Energieversorgungseinrichtung 208 elektrisch leitend zur Energieübertragung mit der Antriebseinrichtung 206 verbunden.

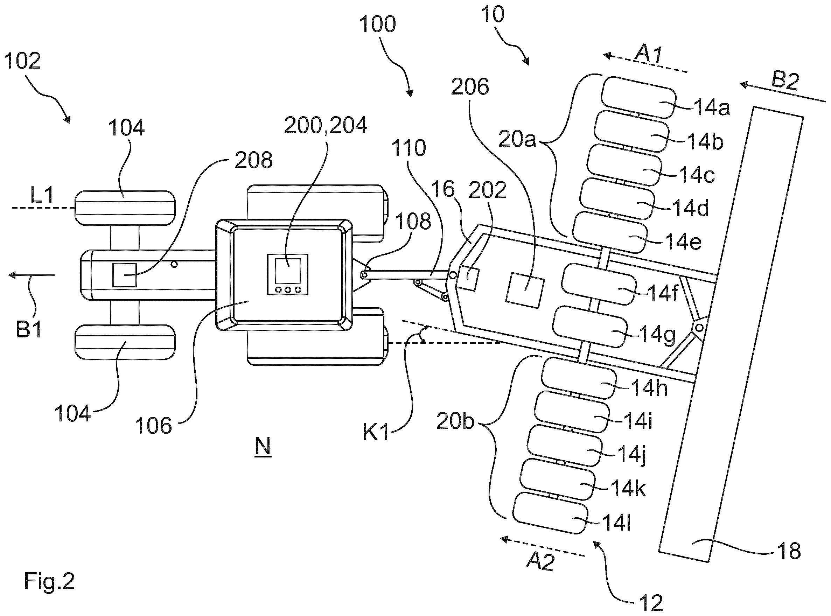

Die Fig. 2 zeigt einen erfindungsgemäßen landwirtschaftlichen Maschinenverbund 100 umfassend eine gezogene landwirtschaftliche Arbeitsmaschine 10 und ein Zug- oder Trägerfahrzeug 102, welches als Traktor ausgebildet ist und die Arbeitsmaschine 10 zieht. In der Fig. 2 ist der Maschinenverbund 100 während eines Bearbeitungsvorgangs auf einer landwirtschaftlichen Nutzfläche N dargestellt, wobei der Maschinenverbund 100 einen geneigten Hang entlangfährt, insbesondere quer zum Hang. Bei Bearbeitungsvorgängen in Bereichen von Nutzflächen N, in welchen die Nutzfläche eine Hangneigung aufweist, können Seitenkräfte und/oder Querkräfte quer zur Bewegungsrichtung B2 der Arbeitsmaschine 10 auf die Arbeitsmaschine 10 wirken, wobei die durch die Hangneigung auf die Arbeitsmaschine 10 wirkenden Kräfte dafür sorgen können, dass die Arbeitsmaschine 10 hangabwärts driftet. Das Zug- oder Trägerfahrzeug 102 bewegt sich in einer Bewegungsrichtung B1 entlang des Hangs über die Nutzfläche N, wobei es beabsichtigt ist, dass die Arbeitsmaschine 10 der Bewegungsrichtung B1 des Zug- oder Trägerfahrzeugs 102 im Wesentlichen folgt.

Dadurch, dass die Arbeitsmaschine 10 durch die Neigung des Hangs quer zur Bewegungsrichtung B1 des Zug- oder Trägerfahrzeugs 102 abdriftet, kann sich bei Hangfahrten eine von der Bewegungsrichtung B1 abweichende Bewegungsrichtung B2 der Arbeitsmaschine 10 einstellen, wobei aus den unterschiedlichen Bewegungsrichtungen B1, B2 des Zug- oder Trägerfahrzeugs 102 und der Arbeitsmaschine 10 voneinander abweichende und sich nicht deckende Fahrwege des Zug- oder Trägerfahrzeugs 102 und der Arbeitsmaschine 10 resultieren. Folglich fährt die Arbeitsmaschine 10 nicht in der beabsichtigten und von dem Zug- oder Trägerfahrzeug 102 vorgegebenen Bewegungsrichtung B1, sodass die Arbeitsmaschine 10 nicht wie beabsichtigt die Nutzfläche N bearbeitet und somit die Arbeitsqualität der Arbeitsmaschine 10 leiden kann, im schlimmsten Fall die Nutzfläche N sogar bereichsweise durch die Arbeitsmaschine 10 beschädigt werden kann. Die Bewegungsrichtung B1 des Zug- oder Trägerfahrzeugs 102 kann durch Einstellen eines Lenkwinkels L1 der lenkbaren Räder 104 des Zug- oder Trägerfahrzeugs 102 vorgegeben werden. Durch das Hangabwärtsdriften der Arbeitsmaschine 10 stellt sich eine Änderung der Ausrichtung der Arbeitsmaschine 10 relativ zum Zug- oder Trägerfahrzeug 102 ein, wobei sich folglich zwischen der Arbeitsmaschine 10 und dem Zug- oder Trägerfahrzeug 102 ein Knickwinkel K1 einstellt, welcher sich aus der Längserstreckungsrichtung der Arbeitsmaschine 10 und der Längserstreckungsrichtung des Zug- oder Trägerfahrzeugs 102 ergibt. Bei Geradeausfahrten des Maschinenverbunds 100 ist es beabsichtigt, dass der Knickwinkel K1 zwischen der Arbeitsmaschine 10 und dem Zug- oder Trägerfahrzeug 102 bei im Wesentlichen 0° liegt, sodass das Zug- oder Trägerfahrzeug 102 und die Arbeitsmaschine 10 eine Linie bilden und dem gleichen Fahrweg in einer identischen Bewegungsrichtung B1, B2 folgen. In der in der Fig. 2 dargestellten Situation ist der Knickwinkel K1 größer als 0°, da die Arbeitsmaschine 10 durch die Hangneigung und das Abdriften hangabwärts relativ zum Zug- oder Trägerfahrzeug 102 abknickt.

Die Arbeitsmaschine 10, welche beispielsweise als Sämaschine ausgebildet ist, umfasst eine Walze 12, welche vorliegend als Reifenpacker zur Verfestigung des Bodens der Nutzfläche N ausgebildet ist. Die Walze 12 umfasst mehrere Walzensegmente 14a - 14l, welche quer zur Bewegungsrichtung B2 der Arbeitsmaschine 10 nebeneinander und beabstandet voneinander in einer Reihe angeordnet sind. Die Walzensegmente 14a - 14l der Walze 12 sind bei einem Reifenpacker als Reifen ausgebildet. Beispielsweise die Walzensegmente 14a - 14e bilden einen Ausleger 20a und die Walzensegmente 14h - 14l bilden einen zweiten Ausleger 20b, wobei die Ausleger 20a und 20b vorzugsweise um eine Schwenkachse zwischen Straßentransportstellung und Arbeitsstellung verschwenkbar sind. Vorzugsweise sind die Walzensegmente 14a - 14e und 14h - 14l als Packerreifen ausgebildet. Die Walzensegmente 14f, 14g, welche von dem Trägerrahmen 16 der Arbeitsmaschine 10 umgeben und/oder getragen werden, sind vorzugsweise als Fahrwerksreifen ausgebildet, wobei Fahrwerksreifen bei Auslegern 20a, 20b in Straßentransportposition weiterhin Bodenkontakt haben.

Zudem umfasst die Arbeitsmaschine 10 Arbeitswerkzeuge 18, welche hinter der Walze 12 angeordnet sind und beispielsweise als Säschare ausgebildet sein können. Mittels einer Antriebseinrichtung 206 ist zumindest ein Walzensegment 14a - 14l der Walze 12 antreibbar. Insbesondere können mittels der Antriebseinrichtung 206 mehrere der Walzensegmente 14a - 14l angetrieben werden. Durch das Antreiben einer oder mehrerer Walzensegmente 14a - 14l der Walze 12 der Arbeitsmaschine 10 mittels der Antriebseinrichtung 206 kann eine Abweichung der Bewegungsrichtungen B1, B2 der Arbeitsmaschine 10 und dem Zug- oder Trägerfahrzeug 102, insbesondere zum Einstellen eines beabsichtigten Knickwinkels K1 zwischen der Arbeitsmaschine 10 und dem Zug- oder Trägerfahrzeug 102 zum Sicherstellen eines beabsichtigten Fahrweges individuell an die aktuell vorliegende Situation abhängig von einem aktuellen Maschinenzustand der Arbeitsmaschine 10 justiert werden. In der in der Fig. 2 dargestellten Situation, in welcher die Arbeitsmaschine 10 hangabwärts abdriftet und sich somit ein nicht beabsichtigter Knickwinkel K1 und eine daraus resultierende Abweichung der Fahrwege der Arbeitsmaschine 10 und des Zug- und/oder Trägerfahrzeugs 102 einstellt, ist es insbesondere vorteilhaft, wenn zumindest ein Walzensegment 14a - 14e am Ausleger 20a und zumindest ein Walzensegment 14h - 14l am Ausleger 20b derart antreibbar ist, dass das Abdriften der Arbeitsmaschine 10 hangabwärts ausgeglichen werden kann, um in der Folge einen beabsichtigten Knickwinkel K1 wiederherzustellen, sodass die Arbeitsmaschine und das Zug- oder Trägerfahrzeug 102 einem beabsichtigten Fahrweg, insbesondere in derselben Bewegungsrichtung B1, B2 folgen.

Um den aktuellen Maschinenzustand der Arbeitsmaschine 10, auf deren Grundlage das Antreiben der Walzensegmente 14a - 14l ausgeführt wird, zu erfassen, ist an der Arbeitsmaschine 10 eine Erfassungseinrichtung 202 angeordnet. Die Erfassungseinrichtung 202 ist dazu eingerichtet, Maschinenparameter der Arbeitsmaschine 10 und/oder äußere Einflüsse auf die Arbeitsmaschine 10 zu erfassen, wobei die von der Erfassungseinrichtung 202 erfassten Sensordaten zum Auswerten an eine Datenverarbeitungseinrichtung 204 übermittelt werden können. Die Datenverarbeitungseinrichtung 204 kann beispielsweise Bestandteil eines Bedienterminals für die Arbeitsmaschine 10 und/oder das Zug- oder Trägerfahrzeug 102 sein. Die Datenverarbeitungseinrichtung 204 kann beispielsweise in einer Fahrerkabine 106 des Zug- oder Trägerfahrzeugs 102 angeordnet sein. Die Datenverarbeitungseinrichtung 204 kann die von der Erfassungseinrichtung 202 erfassten Sensordaten auswerten, um auf Grundlage der Sensordaten Steuerungsvorgaben zum Steuern des Antreibens der Walzensegmente 14a - 14l abzuleiten. Die von der Erfassungseinrichtung 202 erfassten Sensordaten können beispielsweise den Lenkwinkel L1 des Zug- oder Trägerfahrzeugs 102, den Knickwinkel K1 zwischen der Arbeitsmaschine 10 und dem Zug- oder Trägerfahrzeug 102, die Neigung der Arbeitsmaschine 10, eine Drehrate, insbesondere Gierrate, der Arbeitsmaschine 10, auf die Arbeitsmaschine 10 wirkende Kräfte, insbesondere Seitenkräfte durch Hangneigung, die Geoposition des Zug- oder Trägerfahrzeugs 102 und/oder der Arbeitsmaschine 10, die Bewegungsrichtung B1, B2 und/oder die Bewegungsgeschwindigkeiten der Arbeitsmaschine 10 und/oder des Zug- oder Trägerfahrzeugs 102 und/oder die Drehzahlen der Walze 12 und/oder der Walzensegmente 14a - 14l betreffen.

Aus den erfassten Sensordaten kann insbesondere durch Auswerten der Sensordaten mittels der Datenverarbeitungseinrichtung 204 ermittelt werden, ob der Bearbeitungsvorgang der Nutzfläche N mittels der Arbeitsmaschine 10 wie beabsichtigt ausgeführt wird oder ob ein Eingreifen notwendig ist. Wird beim Auswerten der Sensordaten mittels der Datenverarbeitungseinrichtung 204 festgestellt, dass die Sensordaten Auffälligkeiten zeigen und beispielsweise Einbußen bei der Arbeitsqualität oder gar Beschädigungen der Nutzfläche N drohen, kann die Datenverarbeitungseinrichtung 204 entsprechende Steuerungsvorgaben ableiten, welche das Antreiben zumindest eines der Walzensegmente 14a - 14l betrifft, wobei durch das Antreiben ein beabsichtigter und die Arbeitsqualität verbessernder Maschinenzustand der Arbeitsmaschine 10 wiederhergestellt und/oder beibehalten werden kann.

Die von der Datenverarbeitungseinrichtung 204 auf Grundlage der Sensordaten abgeleiteten Steuerungsvorgaben werden an eine Steuerungseinrichtung 200 übertragen, welche Bestandteil des Bedienterminals für die Arbeitsmaschine 100 und/oder für das Zug- oder Trägerfahrzeug 102 sein kann, wobei die Steuerungseinrichtung 200 in der Fahrerkabine 106 des Zug- oder Trägerfahrzeugs 102 oder an der Arbeitsmaschine 10 angeordnet sein kann. Um den Knickwinkel K1 zwischen der Arbeitsmaschine 10 und dem Zug- oder Trägerfahrzeug 102 zu korrigieren und somit die Arbeitsmaschine 10 zurück auf ihren beabsichtigten Fahrweg in der Bewegungsrichtung B1 des Zug- oder Trägerfahrzeugs 102 zu bringen, kann die Steuerungseinrichtung 200 die Antriebseinrichtung 206 derart steuern, dass zumindest ein Walzensegment der Walzensegmente 14a - 14e des Auslegers 20a, vorzugsweise mehrere der Walzensegmente 14a - 14e mit einer Antriebsleistung A1 angetrieben werden, welche einer höheren Antriebsleistung entspricht als eine Antriebsleistung A2, mit welcher zumindest ein Walzensegment der Walzensegmente 14h - 14l des Auslegers 20b angetrieben wird. Die Walzensegmente 14h - 14l des Auslegers 20b können entweder gar nicht angetrieben oder mit einer im Vergleich zur Antriebsleistung A1 niedrigeren Antriebsleistung A2 angetrieben werden. Die als Fahrwerksreifen ausgebildeten Walzensegmente 14f, 14g können zur Unterstützung alternativ oder zusätzlich angetrieben sein. Vorzugsweise sind alle Walzensegmente 14a - 14l unabhängig voneinander mit unterschiedlich hohen Antriebsleistungen A1, A2 sowie unterschiedlichen Drehmomenten, Drehraten und Drehzahlen antreibbar, wobei die Steuerungseinrichtung 200 die Antriebseinrichtung 206 so steuert, dass die Walzensegmente 14a - 14l derart angetrieben werden, dass die Arbeitsmaschine 10 möglichst zeitnah zu einem beabsichtigten Maschinenzustand zurückkehrt, um trotz der Hangneigung sicherzustellen, dass die Arbeitsmaschine 10 der Bewegungsrichtung B1 des Zug- oder Trägerfahrzeugs 102 ohne Knickwinkel K1 folgt.

Die Arbeitsmaschine 10 ist über eine Deichsel 110, welche gelenkig an dem Trägerrahmen 16 der Arbeitsmaschine 10 verbunden ist, an einer Kopplungseinrichtung 108 des Zug- oder Trägerfahrzeugs 102 mit dem Zug- oder Trägerfahrzeug 102 befestigt. Das Zug- oder Trägerfahrzeug 102 umfasst zudem eine Energieversorgungseinrichtung 208, welche beispielsweise in das Zug- oder Trägerfahrzeug 102 integriert oder als Frontgewicht, Zwischengewicht oder Heckanbau an dem Zug- oder Trägerfahrzeug 102 angeordnet oder auch an der Arbeitsmaschine 10 angeordnet sein kann, wobei die Energieversorgungseinrichtung 208 vorzugsweise als Stromgenerator ausgebildet ist, welcher insbesondere über eine Zapfwelle des Zug- oder Trägerfahrzeugs 102 und/oder ein Hydrauliksystem des Zugfahrzeugs 102 angetrieben wird, sodass elektrische Energie erzeugt wird, welche der Antriebseinrichtung 206, welche vorzugsweise als Elektromotor ausgebildet ist, zur Verfügung gestellt wird.

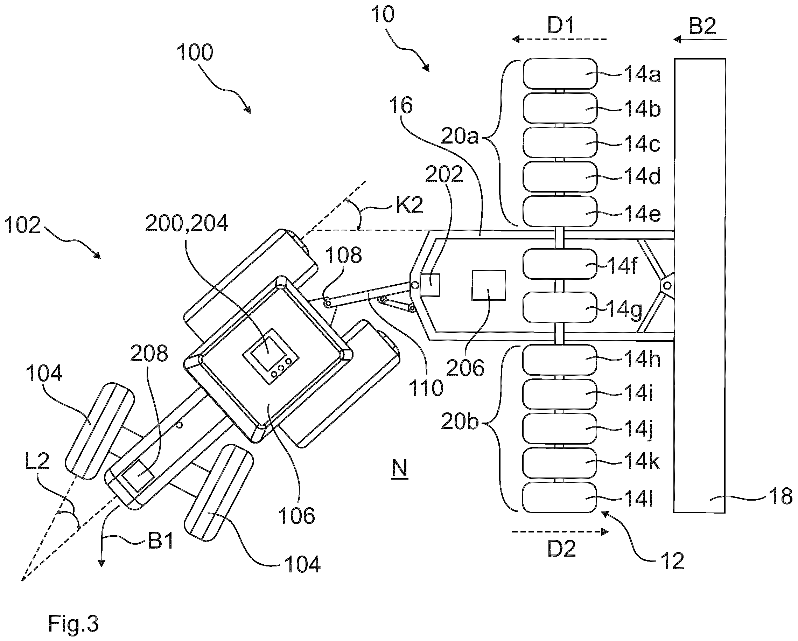

Die Fig. 3 zeigt den landwirtschaftlichen Maschinenverbund 100 aus Fig. 2, während einer Kurvenfahrt, insbesondere während einer Kurvenfahrt im Zuge eines Wendevorgangs, insbesondere während eines Wendevorgangs im Vorgewende der Nutzfläche N. Während eines Wendevorgangs liegt beispielsweise ein Lenkwinkel L2 der lenkbaren Räder 104 des Zug- oder Trägerfahrzeugs 102 vor, durch welchen das Zug- oder Trägerfahrzeug eine Kurvenfahrt in der Bewegungsrichtung B1 ausführt. Durch die Kurvenfahrt stellt sich zwischen der Arbeitsmaschine 10, welche von dem Zug- oder Trägerfahrzeug 102 gezogen wird, und dem Zug- oder Trägerfahrzeug 102 ein Knickwinkel K2 ein.Der Knickwinkel K2 und/oder der Lenkwinkel L2 kann mittels der Erfassungseinrichtung 202 erfasst werden. Alternativ oder zusätzlich kann eine Drehrate, insbesondere Gierrate, der Arbeitsmaschine 10 und/oder eine Geschwindigkeit und/oder Geschwindigkeitsdifferenz kurveninnerer und kurvenäußerer Bereiche der Arbeitsmaschine 10 erfasst werden. Der Knickwinkel K2 und/oder der Lenkwinkel L2 und/oder die Drehrate, insbesondere Gierrate, und/oder Geschwindigkeit und/oder Geschwindigkeitsdifferenz kurveninnerer und kurvenäußerer Bereiche der Arbeitsmaschine 10 können darauf hinweisen, dass gegenwärtig eine Kurvenfahrt und insbesondere ein Wendemanöver ausgeführt wird.

Die Datenverarbeitungseinrichtung 204 ermittelt aus den mittels der Erfassungseinrichtung 202 erfassten Sensordaten, dass gegenwärtig eine Kurvenfahrt vorliegt und leitet aus diesen Sensordaten abgeleitete Steuerungsvorgaben zum Steuern des Antreibens der Walze 12 und/oder eines oder mehrerer Walzensegmente 14a - 14l ab, wobei die Steuerungsvorgaben an die Steuerungseinrichtung 200 weitergeleitet werden, welche die Antriebseinrichtung 206 zum Antreiben der Walzensegmente 14a - 14l steuert. Insbesondere können die Sensordaten mittels der Datenverarbeitungseinrichtung 204 daraufhin ausgewertet werden, ob der Knickwinkel K2 zwischen der Arbeitsmaschine 10 und dem Zug- oder Trägerfahrzeug 102, und/oder der Lenkwinkel L2 und/oder die Drehrate, insbesondere Gierrate, und/oder Geschwindigkeit und/oder Geschwindigkeitsdifferenz kurveninnerer und kurvenäußerer Bereiche der Arbeitsmaschine 10 einen definierten Grenzwert unter- oder überschreitet, oder ob sich der Knickwinkel K2 und/oder der Lenkwinkel L2 und/oder die Drehrate, insbesondere Gierrate, und/oder Geschwindigkeit und/oder Geschwindigkeitsdifferenz kurveninnerer und kurvenäußerer Bereiche der Arbeitsmaschine 10 in einem definierten Sollwertbereich bewegt. Zudem können mittels der Erfassungseinrichtung 202 die Geoposition der Arbeitsmaschine 10 und/oder des Zug- oder Trägerfahrzeugs 102 sowie die Bewegungsrichtung B2 der Arbeitsmaschine 10 und/oder die Bewegungsrichtung B1 des Zug- oder Trägerfahrzeugs 102 erfasst werden.

Die Datenverarbeitungseinrichtung 204 kann aus den Sensordaten ableiten, ob die Arbeitsmaschine 10 dem Fahrweg des Zug- oder Trägerfahrzeugs 102, insbesondere der Bewegungsrichtung B1 des Zug- oder Trägerfahrzeugs 102, wie beabsichtigt folgt. Ergeben die Sensordaten, dass die Arbeitsmaschine 10 von einem beabsichtigten Fahrweg abweicht, insbesondere durch voneinander abweichende Bewegungsrichtungen B1, B2 und/oder einen zu der Bewegungsrichtung B1 des Zug- oder Trägerfahrzeugs 102 nicht korrespondierenden Knickwinkel K2, und/oder eine nicht zu der Bewegungsrichtung B1 korrespondierende Drehrate, insbesondere Gierrate, und/oder Geschwindigkeit und/oder Geschwindigkeitsdifferenz kurveninnerer und kurvenäußerer Bereiche der Arbeitsmaschine 10 werden Steuerungsvorgaben abgeleitet, welche die Steuerungseinrichtung 200 zum Steuern der Antriebseinrichtung 206 verwendet, sodass zumindest ein Walzensegment 14a - 14l so gesteuert und angetrieben wird, dass die Arbeitsmaschine 10 wieder dem beabsichtigten Fahrweg folgt und sich folglich ein beabsichtigter Knickwinkel K2 und/oder eine beabsichtigte Bewegungsrichtung B2 einstellen.

Insbesondere kann durch das Antreiben einer oder mehrerer Walzensegmente 14a - 14l gezielt der Wenderadius eines Wendemanövers, insbesondere im Vorgewende der Nutzfläche N, vorteilhaft verkleinert werden. Dazu können die Walzensegmente 14a - 14l unabhängig voneinander mit unterschiedlichen Drehzahlen und/oder unterschiedlichen Drehrichtungen D1, D2 angetrieben werden. In der in der Fig. 3 dargestellten Situation in einer Linkskurve ist es vorteilhaft, wenn das Walzensegment 14f und/oder zumindest ein Walzensegment der Walzensegmente 14a - 14e des Auslegers 20a in der Drehrichtung D1 und/oder mit erhöhter Drehzahl angetrieben wird. Alternativ oder zusätzlich ist es vorteilhaft, wenn das Walzensegment 14g und/oder zumindest ein Walzensegment der Walzensegmente 14h - 14l des Auslegers 20b in einer zur Drehrichtung D1 entgegengesetzten Drehrichtung D2 und/oder mit verringerter Drehzahl angetrieben wird, sodass der Wendekreis der Arbeitsmaschine 10 verkleinert wird und die Arbeitsmaschine 10 somit auch bei sehr engen Kurvenradien dem Fahrweg des Zug- oder Trägerfahrzeugs 102 in der Bewegungsrichtung B1 zuverlässig folgen kann, um eine beabsichtigte Arbeitsqualität der Arbeitsmaschine 10 sicherzustellen und Beschädigungen der Nutzfläche N durch eine Abweichung der Bewegungsrichtung B1, B2 zu vermeiden.

Außerdem kann das Zug- oder Trägerfahrzeug 102 durch antreibbare Walzen 12 und/oder Walzensegmente 14a - 14l gezielt unterstützt werden, sodass zum Ziehen einer Arbeitsmaschine 10 mit einer antreibbaren Walze kleinere und/oder weniger leistungsfähige Zug- oder Trägerfahrzeuge 102 eingesetzt werden können. Durch das Antreiben von Walzensegmenten 14a - 14l kann außerdem die Traktion der Arbeitsmaschine 10, insbesondere bei ungünstigen Bodenverhältnissen auf der Nutzfläche N, beispielsweise Nässe, erhöht werden, sodass zu hoher Schlupf an einem oder mehreren Walzensegmenten 14a - 14l vermieden und ein Durchdrehen der Reifen der Walze 12 verhindert werden kann.

### Bezugszeichen

- 10: landwirtschaftliche Arbeitsmaschine
- 12: Walze
- 14a-14l: Walzensegmente
- 16: Trägerrahmen
- 18: Arbeitswerkzeuge
- 20a, 20b: Ausleger

- 100: Maschinenverbund
- 102: Zug- oder Trägerfahrzeug
- 104: Räder
- 106: Fahrerkabine
- 108: Kopplungseinrichtung
- 110: Deichsel

- 200: Steuerungseinrichtung
- 202: Erfassungseinrichtung
- 204: Datenverarbeitungseinrichtung
- 206: Antriebseinrichtung
- 208: Energieversorgungseinrichtung

- A1, A2: Antriebsleistung
- B1, B2: Bewegungsrichtung
- D1, D2: Drehrichtung
- K1, K2: Knickwinkel
- L1, L2: Lenkwinkel
- N: Nutzfläche

## Patentansprüche

1. Landwirtschaftliche Arbeitsmaschine (10), insbesondere Sämaschine, mit:
- zumindest einer zumindest ein Walzensegment (14a-14l) umfassenden Walze (12), wobei zumindest ein Walzensegment (14a-14l) der zumindest einen Walze (12) mittels einer Antriebseinrichtung (206) antreibbar ist, und
- einer Erfassungseinrichtung (202), welche dazu eingerichtet ist, zumindest einen aktuellen Maschinenzustand der landwirtschaftlichen Arbeitsmaschine (10) betreffenden Sensordaten zu erfassen,
**gekennzeichnet durch** eine elektronische Steuerungseinrichtung (200), welche dazu eingerichtet ist, die Antriebseinrichtung (206) zum Antreiben des zumindest einen Walzensegments (14a-14l) auf Grundlage der erfassten Sensordaten zu steuern.

2. Landwirtschaftliche Arbeitsmaschine (10) nach Anspruch 1,
**dadurch gekennzeichnet, dass** mehrere Walzensegmente (14a-14l) und/oder mehrere Walzen (12) der Arbeitsmaschine (10) mittels der Antriebseinrichtung (206) antreibbar sind, wobei die Steuerungseinrichtung (200) dazu eingerichtet ist, die Antriebseinrichtung (206) derart zu steuern, dass die Walzensegmente (14a-14l) und/oder die Walzen (12) jeweils separat und/oder gruppenweise mittels der Antriebseinrichtung (206) antreibbar sind.

3. Landwirtschaftliche Arbeitsmaschine (10) nach Anspruch 2,
**dadurch gekennzeichnet, dass** die Steuerungseinrichtung (200) dazu eingerichtet ist, die Antriebseinrichtung (206) derart zu steuern, dass die mehreren Walzensegmente (14a-14l) und/oder die mehreren Walzen (12) jeweils unabhängig voneinander und/oder gruppenweise mit unterschiedlichen Antriebsleistungen (A1, A2) und/oder unterschiedlichen Antriebsmomenten und/oder unterschiedlichen Drehzahlen und/oder unterschiedlichen Drehrichtungen (D1, D2) mittels der Antriebseinrichtung (206) antreibbar sind.

4. Landwirtschaftliche Arbeitsmaschine (10) nach einem der vorstehenden Ansprüche,
**dadurch gekennzeichnet, dass** die mittels der Erfassungseinrichtung (202) erfassten und den aktuellen Maschinenzustand der landwirtschaftlichen Arbeitsmaschine (10) betreffenden Sensordaten
- eine aktuelle Geo-Position und/oder eine aktuelle Bewegungsrichtung (B2) der Arbeitsmaschine (10); und/oder
- einen aktuellen Neigungszustand der Arbeitsmaschine (10); und/oder
- eine aktuelle Bewegungsgeschwindigkeit und/oder Beschleunigung der Arbeitsmaschine (10); und/oder
- eine aktuelle Drehrate, insbesondere Gierrate, der Arbeitsmaschine (10); und/oder
- eine aktuelle auf die Arbeitsmaschine (10) wirkende Querkraft und/oder Querbeschleunigung; und/oder
- eine aktuelle auf die Arbeitsmaschine (10) wirkende Zugkraft; und/oder
- einen Schlupf an einem, mehreren oder sämtlichen Walzensegmenten (14a-14l) und/oder an einer, mehrerer oder sämtlicher Walzen (12) der Arbeitsmaschine (10); und/oder
- die Drehzahl und/oder die Drehrate eines, mehrerer oder sämtlicher Walzensegmente (14a-14l) und/oder einer, mehrerer oder sämtlicher Walzen (12); und/oder
- einen Lenkwinkel (L1, L2) der Arbeitsmaschine (10) und/oder eines Zug- oder Trägerfahrzeugs (102) für die Arbeitsmaschine (10) und/oder einen Knickwinkel (K1, K2) zwischen der Arbeitsmaschine (10) und dem Zug- oder Trägerfahrzeug (102);
betreffen.

5. Landwirtschaftliche Arbeitsmaschine (10) nach einem der vorstehenden Ansprüche,
**dadurch gekennzeichnet, dass** die Arbeitsmaschine (10) eine elektronische Datenverarbeitungseinrichtung (204) umfasst, welche dazu eingerichtet ist, die erfassten Sensordaten zum Steuern der Antriebseinrichtung (206) auszuwerten, wobei die Datenverarbeitungseinrichtung (204) vorzugsweise dazu eingerichtet ist, beim Auswerten der Sensordaten
- die aktuelle Bewegungsgeschwindigkeit der Arbeitsmaschine (10) mit einer beabsichtigten Sollgeschwindigkeit und/oder einer aktuellen Bewegungsgeschwindigkeit des Zug- oder Trägerfahrzeugs (102) für die Arbeitsmaschine (10) zu vergleichen; und/oder
- die aktuelle Beschleunigung der Arbeitsmaschine (10) mit einer beabsichtigten Sollbeschleunigung und/oder einer aktuellen Beschleunigung des Zug- oder Trägerfahrzeugs (102) für die Arbeitsmaschine (10) zu vergleichen; und/oder
- die Bewegungsrichtung (B2) der Arbeitsmaschine (10) mit der Bewegungsrichtung (B1) des Zug- oder Trägerfahrzeugs (102) für die Arbeitsmaschine (10) zu vergleichen; und/oder
- aus der aktuellen Geo-Position der Arbeitsmaschine (10) in Verbindung mit Kartendaten und/oder basierend auf Neigungsmesswerten eine an der aktuellen Geo-Position der Arbeitsmaschine (10) vorherrschende Hangneigung einer landwirtschaftlichen Nutzfläche (N) abzuleiten; und/oder
- aus der aktuellen Geo-Position der Arbeitsmaschine in Verbindung mit Kartendaten, insbesondere Fahrgassendaten, und/oder basierend auf einem gemessenen Lenkwinkel und/oder Knickwinkel und/oder einer gemessenen Drehrate, insbesondere Gierrate, der Arbeitsmaschine (10) die Präsenz einer aktuellen und/oder bevorstehenden Kurvenfahrt aus Fahrgassendaten der landwirtschaftlichen Nutzfläche (N) abzuleiten;
wobei die Steuerungseinrichtung (200) dazu eingerichtet ist, die Antriebseinrichtung (10) auf Grundlage des Vergleichs der Geschwindigkeiten und/oder der Beschleunigungen und/oder der Bewegungsrichtungen (B1, B2) und/oder der abgeleiteten Hangneigung und/oder der Präsenz einer aktuellen Kurvenfahrt und/oder einer bevorstehenden Kurvenfahrt zum Antreiben des zumindest einen Walzensegments (14a-14l) der zumindest einen Walze (12) zu steuern.

6. Landwirtschaftliche Arbeitsmaschine (10) nach einem der vorstehenden Ansprüche,
**dadurch gekennzeichnet, dass**
- die Antriebseinrichtung (206) als Elektromotor oder als Hydraulikmotor ausgebildet ist oder einen Elektromotor oder einen Hydraulikmotor umfasst; und/oder
- die Arbeitsmaschine (10) eine Energieversorgungseinrichtung (208) umfasst, welche an der Arbeitsmaschine (10) angeordnet und dazu eingerichtet ist, die Antriebseinrichtung (206) mit Energie zu versorgen und als elektrischer Generator oder als Hydraulikpumpe ausgebildet ist, wobei die Energieversorgungseinrichtung (208) zum Erzeugen von Energie vorzugsweise an einen Nebenantrieb, insbesondere an eine Zapfwelle und/oder an ein Hydrauliksystem des Zug- oder Trägerfahrzeugs (102) für die Arbeitsmaschine (10) anschließbar ist.

7. Landwirtschaftlicher Maschinenverbund (100), umfassend
- eine landwirtschaftliche Arbeitsmaschine (10), insbesondere eine landwirtschaftliche Arbeitsmaschine (10) nach einem der vorstehenden Ansprüche, zumindest einer zumindest ein Walzensegment (14a-14l) umfassenden Walze (12), wobei zumindest ein Walzensegment (14a-14l) der zumindest einen Walze (12) mittels einer Antriebseinrichtung (206) antreibbar ist, und
- ein Zug- oder Trägerfahrzeug (102), welches dazu eingerichtet ist, die landwirtschaftliche Arbeitsmaschine (10) zu ziehen oder zu tragen,
**dadurch gekennzeichnet, dass** die Arbeitsmaschine (10) und/oder das Zug- oder Trägerfahrzeug (102) eine Energieversorgungseinrichtung (208) umfasst, welche dazu eingerichtet, die Antriebseinrichtung (206) zum Antreiben der zumindest einen zumindest ein Walzensegment (14a-14l) umfassenden Walze (12) mit Energie zu versorgen.

8. Landwirtschaftlicher Maschinenverbund (100) nach Anspruch 7,
**dadurch gekennzeichnet, dass** die Energieversorgungseinrichtung (208) als elektrischer Generator oder als Hydraulikpumpe ausgebildet ist, wobei die Energieversorgungseinrichtung (208) zum Erzeugen von Energie vorzugsweise
- an einen Motor und/oder ein Getriebe des Zug- oder Trägerfahrzeugs (102) anschließbar ist; und/oder
- an einen Nebenantrieb, insbesondere an eine Zapfwelle, und/oder an ein Hydrauliksystem des Zug- oder Trägerfahrzeugs (102) für die Arbeitsmaschine (10) anschließbar ist.

9. Landwirtschaftlicher Maschinenverbund (100) nach Anspruch 7 oder 8,
**dadurch gekennzeichnet, dass** die Energieversorgungseinrichtung (208) als Frontanbau oder als Heckanbau oder als Zwischenanbau an dem Zug- oder Trägerfahrzeug (102) angeordnet ist.

10. Verfahren zum Betreiben einer landwirtschaftlichen Arbeitsmaschine (10), insbesondere einer Arbeitsmaschine (10) nach einem der Ansprüche 1 bis 6, mit den Schritten:
- Erfassen von einen aktuellen Maschinenzustand der landwirtschaftlichen Arbeitsmaschine (10) betreffenden Sensordaten mittels einer elektronischen Erfassungseinheit (202);
- Antreiben zumindest einer Walze (12) der Arbeitsmaschine (10) und/oder zumindest eines Walzensegments (14a-14l) der Walze (10) mittels einer Antriebseinrichtung (206);
**gekennzeichnet durch** den Schritt:
- Steuern der Antriebseinrichtung (206) zum Antreiben des zumindest einen Walzensegments (14a-14l) und/oder der zumindest einen Walze (12) auf Grundlage der erfassten Sensordaten mittels einer elektronischen Steuerungseinrichtung (200).

11. Verfahren zum Betreiben eines landwirtschaftlichen Maschinenverbunds (100), insbesondere eines Maschinenverbunds (100) nach einem der Ansprüche 7 bis 9, mit den Schritten:
- Antreiben zumindest eines Walzensegments (14a-14l) und/oder zumindest einer Walze (12) einer landwirtschaftlichen Arbeitsmaschine (10), insbesondere einer Arbeitsmaschine (10) nach einem der Ansprüche 1 bis 6, mittels einer Antriebseinrichtung (206); und
- Ziehen oder Tragen der Arbeitsmaschine (10) mittels eines Zug- oder Trägerfahrzeugs (102);
**gekennzeichnet durch** den Schritt:
- Versorgen der Antriebseinrichtung (206) mit Energie zum Antreiben des zumindest einen Walzensegments (14a-14l) und/oder der zumindest einen Walze (12) mittels einer Energieversorgungseinrichtung (208) des Zug- oder Trägerfahrzeugs (102).
